# EUROPEAN PATENT APPLICATION

(11) **EP 2 105 771 A1**
(43) Date of publication of application: **30.09.2009**
(21) Application number: 07806447.4
(22) Date of filing: 31.08.2007
(51) Int. Cl.: G02B 6/24

(54) **MECHANICAL SPLICE**

(30) Priority: 10.01.2007 JP 2007002175
(71) Applicant: Yamanoi, Kozo, Tokyo 105-0000 (JP)
(72) Inventor: Yamanoi, Kozo, Tokyo 105-0000 (JP)
(74) Representative: Hirsz, Christopher Stanislaw
(86) International application number: PCT/JP2007/066970
(87) International publication number: WO 2008/084572

(57) **Abstract**

To prevent an optical fiber from readily detaching and to prevent the optical fiber from being damaged when a mechanical splice is used.

A housing (2) has supply holes (58b, 59b) for supplying a bonding agent to both end parts of a metal sleeve (10). When the bonding agent is supplied through the supply holes (58b, 59b), the bonding agent enters the space between the outer circumferential surfaces of optical fiber strands and the inner circumferential surface of the metal sleeve (10), and the optical fibers can therefore be bonded to both end parts of the metal sleeve (10). Damage to the optical fiber strands can therefore be prevented even when the mechanical splice is used in an environment subject to frequent vibration. Water and debris can be prevented from entering through the apertures on the ends of the metal sleeve (10).

## Description

### TECHNICAL FIELD

The present invention relates to a mechanical splice for mechanically connecting optical fibers.

### BACKGROUND ART

A conventional mechanical splice is provided with a mechanical splice body, a metal ferrule, and a pair of wedge pieces (see Patent Document 1).

The mechanical splice body comprises a base plate and a cover plate. The base plate is substantially prismatic. A long groove that extends along the longitudinal direction of the base plate is formed on the upper surface of the base plate. The long groove comprises a ferrule-attachment groove and guide grooves that are positioned on both sides of the ferrule-attachment groove. The guide grooves guide the individual optical fibers into the mechanical splice body. The entrance sides of the guide grooves widen to allow insertion of the wedge pieces. The cover plate is secured to the upper surface of the base plate.

A long groove that extends along the longitudinal direction of the cover plate is formed on the lower surface of the cover plate. The long groove comprises a ferrule-attachment groove and guide grooves that are positioned on both sides of the ferrule-attachment groove. The ferrule-attachment groove of the cover plate aligns with the ferrule-attachment groove of the base plate. The guide grooves of the cover plate align with the respective guide grooves of the base plate.

The metal ferrule has a discharge hole. The metal ferrule is accommodated in the opposing ferrule-attachment grooves of the base plate and the cover plate.

The wedge pieces are inserted into the end parts of the opposing guide grooves of the base plate and the cover plate.

The operation for connecting optical fibers using this mechanical splice is as follows.

First, the coverings on the tips of two optical fibers are removed, and the optical fiber strands are exposed. The two optical fibers are inserted into the respective guide grooves, and the wedge pieces are then inserted into the end parts of each of the guide grooves. At this point, the wedge pieces convey the optical fibers toward the discharge hole of the metal ferrule, and the optical fibers are urged onto the base plate.

The end surfaces of the optical fiber strands are brought into contact within the metal ferrule by the operation above, and the two optical fibers are optically connected.

However, the amount by which the optical fibers are conveyed along by the wedge pieces is not constant, and in some cases the end surfaces of the optical fiber strands will not be brought into contact at the position of the discharge hole of the metal ferrule. Air and the like is trapped between the end surfaces of the optical fibers within the metal ferrule in such instances, and therefore the end surfaces of the optical fiber strands are not brought into contact.

An invention of a mechanical splice was submitted by the applicants of the present invention in order to solve this problem (see Patent Document 2).

This mechanical splice is provided with a housing, a pair of levers, and a metal ferrule.

A pair of optical-fiber insertion holes is formed in the housing. The optical-fiber insertion holes extend along the longitudinal direction of the housing.

The levers are provided respectively to both of the end parts of the housing. The levers have a pressing part. The levers can rotate between a position allowing optical fiber insertion and a position for optical fiber immobilization.

The metal ferrule is positioned between the pair of optical-fiber insertion holes. An aperture is formed in the central part of the metal ferrule.

The operation for connecting optical fibers using this mechanical splice is as follows.

First, the coverings on the tips of two optical fibers are removed, and the optical fiber strands are exposed.

The levers are then rotated from the position allowing optical fiber insertion to the position for optical fiber immobilization. At this point the optical fibers are conveyed toward the metal ferrule by the pressing parts of the levers, after which the optical fibers are clamped to the inner circumferential surface of the optical-fiber insertion holes and are immobilized to the housing.
[Patent Document 1] Japanese Laid-open Patent Application No. 2006-227561
[Patent Document 2] Japanese Registered Utility Model No. 3121157

### DISCLOSURE OF THE INVENTION

### [Problems the Invention Is Intended to Solve]

A method for putting pressure on the optical fiber in which the pressing part of the lever cuts into the optical fiber is employed in the mechanical splice of Patent Document 2. In the event of errors in manufacturing the lever, the optical fiber strand may accordingly break, or the optical fiber may readily detach due to insufficient pressing force.

Conversely, it should be possible to prevent the optical fiber from readily detaching by injecting a bonding agent into the mechanical splice of Patent Document 2 from a bonding agent injection hole in the cover plate.

However, when the mechanical splice of Patent Document 2 is used in an environment subject to frequent vibration (e.g., within the engine room of a vehicle), the vibration is transmitted to the optical fibers. The optical fiber strands vibrate, but in such instances the optical fiber strands may hit the edges of the apertures positioned on both ends of the metal ferrule and become damaged or broken.

The present invention was devised in light of these problems, and it is an object thereof to prevent the optical fibers from readily detaching and to prevent damage to the optical fibers during use of the mechanical splice.

### [Means for Solving the Aforementioned Problems]

A mechanical splice of the present invention for solving the aforementioned problems is characterized in comprising a sleeve for bringing into contact an end part of a first optical fiber and an end part of a second optical fiber to be connected to the first optical fiber; a housing for accommodating both of the optical fibers and the sleeve; and optical fiber immobilizing means for securing both of the optical fibers to the housing, the optical fibers being accommodated in the housing, wherein the optical fiber immobilizing means has a first movable member for conveying the end part of the first optical fiber toward the end part of the second optical fiber when [the first movable member is] moved along a first direction from a first position allowing optical fiber insertion to a first position for optical fiber immobilization, the first movable member being linked to a first end part of the housing so as to be capable of sliding in the first direction, the first direction intersecting a longitudinal direction of the housing; and a second movable member for conveying the end part of the second optical fiber toward the end part of the first optical fiber when [the second movable member is] moved along a second direction from a second position allowing optical fiber insertion to a second position for optical fiber immobilization, the second movable member being linked to a second end part of the housing so as to be capable of sliding in the second direction, the second direction intersecting with the longitudinal direction of the housing; and the housing has supply holes for supplying a bonding agent to both end parts of the sleeve.

An opening and closing member for opening and closing the supply hole is preferably provided to the housing.

The first movable member preferably has a pressing surface for contacting the first optical fiber while moving along the first direction from the first position allowing optical fiber insertion to the first position for optical fiber immobilization; and the second movable member preferably has a pressing surface for contacting the second optical fiber while moving along the second direction from the second position allowing optical fiber insertion to the second position for optical fiber immobilization.

At least one movable member from among the first and second movable members preferably engages with the opening and closing member so as to operate the opening and closing member and close the two supply holes when moved from the position allowing optical fiber insertion to the position for optical fiber immobilization.

The housing preferably has a first precompression space part for bending the end part of the first optical fiber; and a second precompression space part for bending the end part of the second optical fiber.

A first cam pin is preferably provided to the first end part of the housing, and a first cam hole for engaging with the first cam pin and causing the first movable member to move in the first direction is preferably formed on the first movable member. A second cam pin is preferably provided to the second end part of the housing, and a second cam hole for engaging with the second cam pin and causing the second movable member to move in the second direction is preferably formed on the second movable member.

### [Effect of the Invention]

According to the present invention, the optical fibers can be prevented from readily detaching, and damage to the optical fibers can be prevented during use of the mechanical splice.

### BRIEF DESCRIPTION OF THE DRAWINGS

FIG. 1A is a plan view of the mechanical splice of an embodiment of the present invention;
FIG. 1B is a cross-sectional view along line 1B-1B in FIG. 1A;
FIG. 1C is a rear view of the mechanical splice shown in FIG. 1A;
FIG. 1D is a bottom view of the mechanical splice shown in FIG. 1A;
FIG. 1E is a cross-sectional view along line 1E-1E in FIG. 1A;
FIG. 1F is a cross-sectional view along line 1F-1F in FIG. 1A;
FIG. 1G is a cross-sectional view along line 1G-1G in FIG. 1A;
FIG. 2A is a plan view of the cover of the housing of the mechanical splice of FIG. 1;
FIG. 2B is a cross-sectional view along line 2B-2B in FIG. 2A;
FIG. 2C is a rear view of the cover shown in FIG. 2A;
FIG. 2D is a bottom view of the cover shown in FIG. 2A;
FIG. 2E is a cross-sectional view along line 2E-2E in FIG. 2A;
FIG. 2F is a cross-sectional view along line 2F-2F in FIG. 2A;
FIG. 3A is a plan view of the slider of the mechanical splice of FIG. 1;
FIG. 3B is a cross-sectional view along line 3B-3B shown in FIG. 3A;
FIG. 3C is a rear view of the slider shown in FIG. 3A;
FIG. 3D is a bottom view of the slider shown in FIG. 3A;
FIG. 3E is a lateral view of the slider shown in FIG. 3A;
FIG. 3F is a lateral view of the slider shown in FIG. 3A;
FIG. 4 is an enlarged rear view of the slider shown in FIG. 3;
FIG. 5A is a front view of the shutter;
FIG. 5B is a plan view of the shutter;
FIG. 6 is a cross-sectional view of the mechanical splice according to a second embodiment of the present invention; and
FIG. 7 is a cross-sectional view of the mechanical splice according to a third embodiment of the present invention.

### [Key]

- 2: Housing
- 3: Base
- 32a: First precompression space part
- 33a: Second precompression space part
- 34: Cam pin (first cam pin)
- 35: Cam pin (first cam pin)
- 36: Cam pin (second cam pin)
- 37: Cam pin (second cam pin)
- 5: Cover
- 58b: Supply hole
- 59b: Supply hole
- 6: Slider (first movable member)
- 62a: Cam hole (first cam hole)
- 62b: Cam hole (first cam hole)
- 63a: Pressing surface
- 7: Slider (second movable member)
- 72a: Cam hole (second cam hole)
- 72b: Cam hole (second cam hole)
- 73a: Pressing surface
- 8: Shutter (opening and closing member)
- 9: Shutter (opening and closing member)
- 10: Metal sleeve (sleeve)
- 17: Optical fiber (first optical fiber)
- 18: Optical fiber (second optical fiber)

### BEST MODE FOR CARRYING OUT THE INVENTION

Embodiments of the present invention are described below with reference to the drawings.

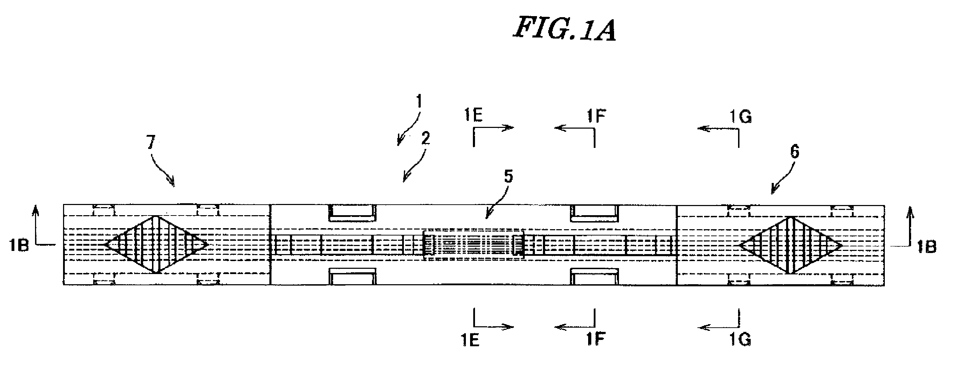

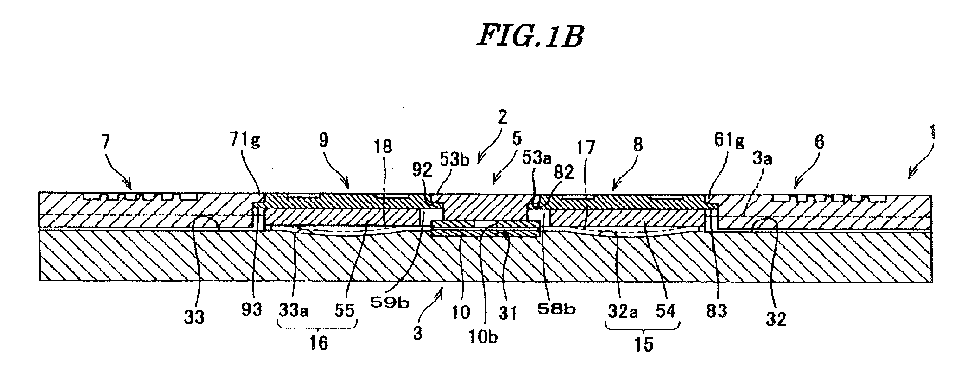

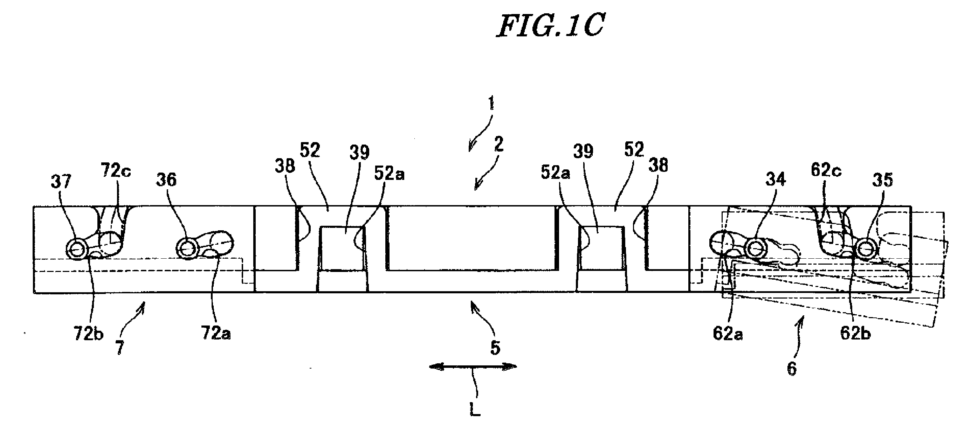

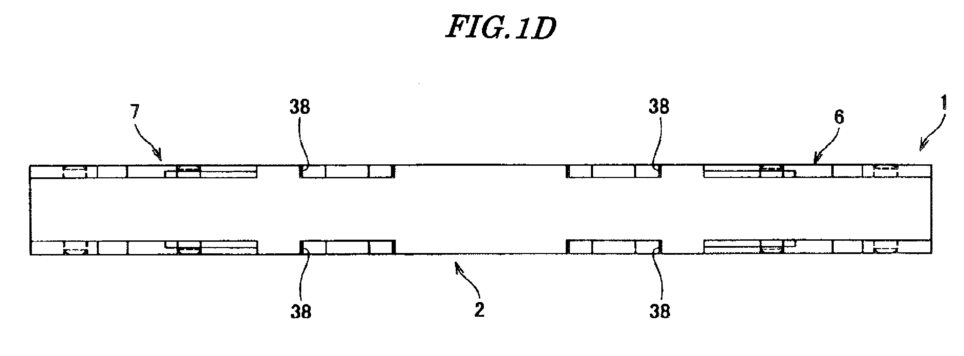

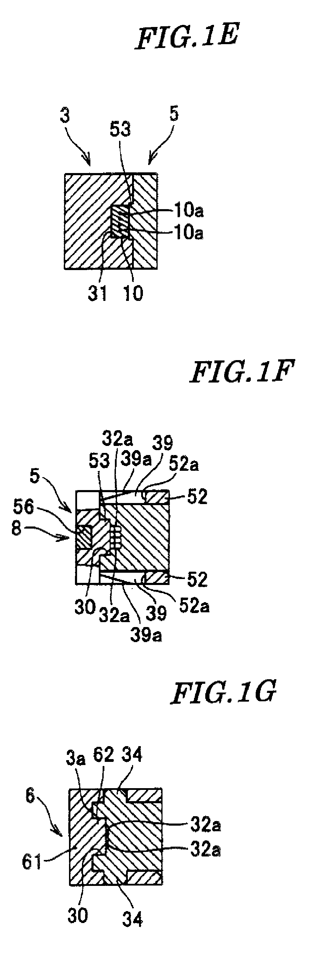

FIG. 1A is a plan view of the mechanical splice of a first embodiment of the present invention. FIG. 1B is a cross-sectional view along line 1B-1B in FIG. 1A. FIG. 1C is a rear view of the mechanical splice shown in FIG. 1A. FIG. 1D is a bottom view of the mechanical splice shown in FIG. 1A. FIG. 1E is a cross-sectional view along line 1E-1E in FIG. 1A. FIG. 1F is a cross-sectional view along line 1F-1F in FIG. 1A. FIG. 1G is a cross-sectional view along line 1G-1G in FIG. 1A.

This mechanical splice is provided with a housing 2 and two sliders (first and second movable members) 6, 7 provided on both end parts of the housing 2, as shown in FIGS. 1A through 1G.

The housing 2 comprises a base 3 and a cover 5.

The base 3 is substantially prismatic. A central concave part 30 is formed along a longitudinal direction L of the base 3 on an upper surface 3a of the base (see FIG. 1F). One end of the central concave part 30 reaches an end surface of the base 3 in the longitudinal direction L, and the other end of the central concave part 30 reaches the other end surface of the base 3 in the longitudinal direction L. A sleeve receiving slot 31, four first optical fiber receiving slots 32, and four second optical fiber receiving slots 33 are formed in the bottom surface of the central concave part 30. The single sleeve receiving slot 31 is positioned in the center of the central concave part 30. One set of ends of the four first optical fiber receiving slots 32 all lead to the sleeve receiving slot 31, and the other ends reach the end surface of the base 3 in the longitudinal direction L. Each of the first optical fiber receiving slots 32 has a first precompression space part 32a. The depth of the portions of the first optical fiber receiving slots 32 other than the first precompression space part 32a is slightly less than the outside diameter of an optical fiber 17 (first optical fiber). One set of ends of the four second optical fiber receiving slots 33 all lead to the sleeve receiving slot 31, and the other ends reach the other end surface of the base 3 in the longitudinal direction L. Each of the second optical fiber receiving slots 33 has a second precompression space part 33a. The depth of the portions of the second optical fiber receiving slots 33 other than the second precompression space part 33a is slightly less than the outside diameter of an optical fiber 18 (second optical fiber).

Two cam pins 34, 35 (first cam pins) are formed on the front and rear surface, respectively, of one end part of the base 3. The cam pins 34, 35 are cylindrical. The cam pins 34, 35 are arranged on an imaginary line that is substantially parallel to the longitudinal direction L of the base 3.

Two cam pins 36, 37 (second cam pins) are formed on the front and rear surface, respectively, of the other end part of the base 3. The cam pins 36, 37 are cylindrical. The cam pins 36, 37 are arranged on an imaginary line that is substantially parallel to the longitudinal direction L of the base 3.

Two concave parts 38 are formed on the front and rear surface, respectively, of the central part of the base 3. Protrusions 39 are formed on the bottom surfaces of the concave parts 38. Inclined surfaces 39a are formed on the protrusions 39 (see FIG. 1F).

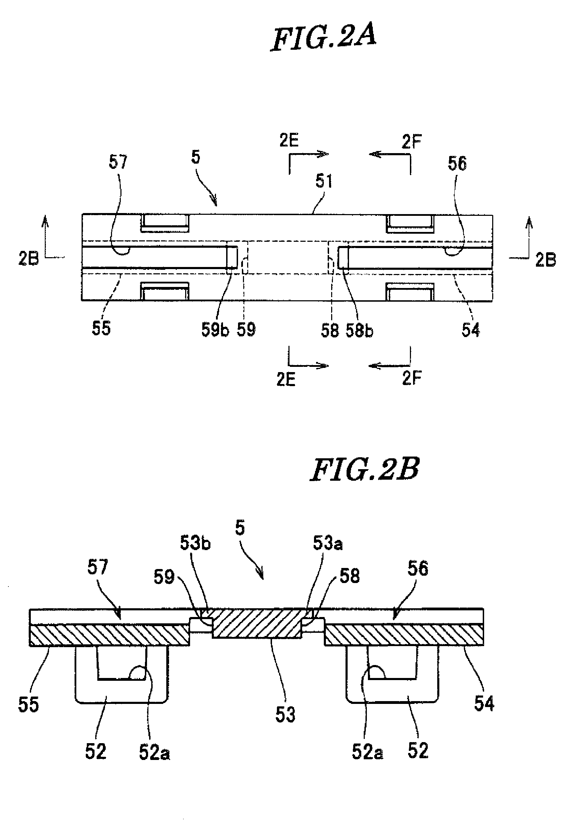

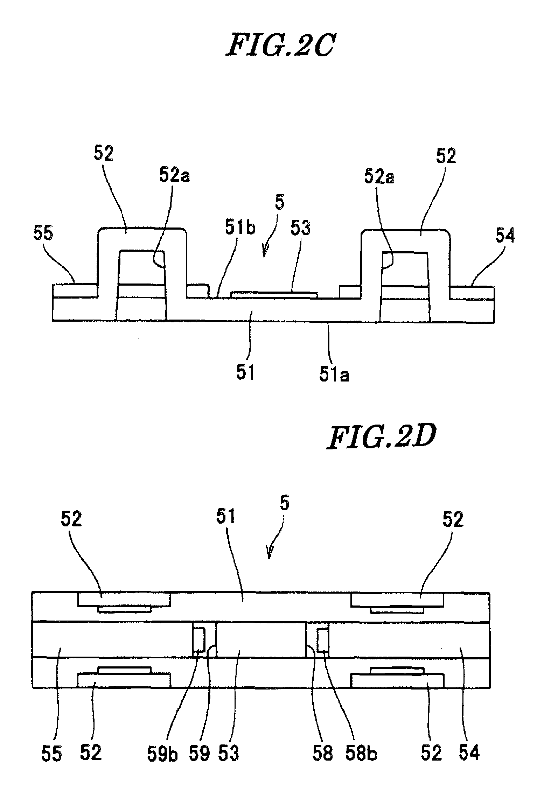

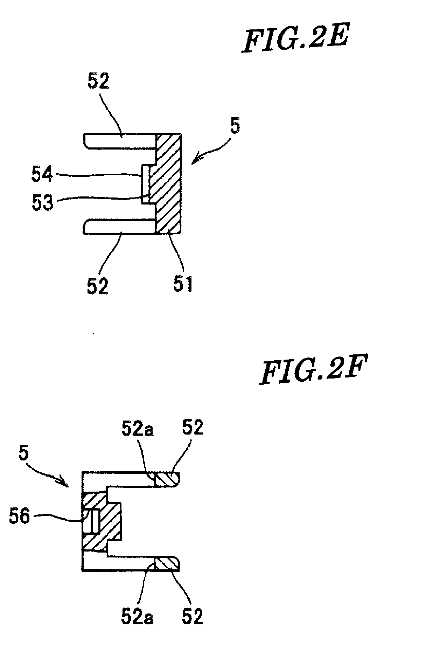

FIG. 2A is a plan view of the cover of the housing of the mechanical splice of FIG. 1. FIG. 2B is a cross-sectional view along line 2B-2B in FIG. 2A. FIG. 2C is a rear view of the cover shown in FIG. 2A. FIG. 2D is a bottom view of the cover shown in FIG. 2A. FIG. 2E is a cross-sectional view along line 2E-2E in FIG. 2A. FIG. 2F is a cross-sectional view along line 2F-2F in FIG. 2A.

The cover 5 has a flat plate part 51 and protruding pieces 52, as shown in FIGS. 2A through 2F.

A sleeve restraining part 53 and cover parts 54, 55 are formed on a lower surface 51b of the flat plate part 51. The sleeve restraint part 53 is positioned in the center of the lower surface 51b. The cover part 54 is positioned on one end of the lower surface 51b. The cover part 55 is positioned on the other end of the lower surface 51b. When the cover 5 is mounted on the base 3, the sleeve restraining part 53 and the cover parts 54, 55 are inserted into the central concave part 30 of the base 3, and the sleeve restraining part 53 restrains a metal sleeve 10 (see FIG. 1E) accommodated in the sleeve-receiving concave part 31 of the base 3. The cover parts 54, 55 cover the first and second precompression space parts 32a, 33a, respectively, of the first and second optical fiber receiving slots 32, 33 of the base 3. The metal sleeve 10 has four strand-receiving holes 10a (see FIG. 1E). The metal sleeve 10 also has four apertures 10b (see FIG. 1B). Matching oil is supplied through the apertures 10b to the strand-receiving holes 10a.

Two receiving slots 56, 57 are formed on an upper surface 51a of the flat plate part 51. The receiving slots 56, 57 extend in the longitudinal direction of the flat plate part 51. The receiving slots 56, 57 and the cover parts 54, 55 face each other in the thickness direction of the plate. The width of the receiving slots 56, 57 is narrower than the width of the cover parts 54, 55. The receiving slots 56, 57 are longer than the cover parts 54, 55.

A concave part 58 is formed between the cover part 54 and the sleeve restraining part 53 of the lower surface 51b of the flat plate part 51. The concave part 58 and the receiving slot 56 are connected by a supply hole 58b (see FIG. 2A). An engagement piece 53a is formed on the sleeve restraining part 53 adjoining the concave part 58.

A concave part 59 is formed between the cover part 55 and the sleeve restraining part 53 of the lower surface 51b of the flat plate part 51. The concave part 59 and the receiving slot 57 are connected by a supply hole 59b (see FIG. 2A). An engagement piece 53b is formed on the sleeve restraining part 53 adjoining the concave part 59.

The protruding pieces 52 are linked to the flat plate part 51. Holes 52a are formed in the protruding pieces 52. The protruding pieces 52 are accommodated in the concave parts 38 of the base 3. The holes 52a receive the protrusions 39 when the protruding pieces 52 are accommodated in the concave parts 38. The protruding pieces 52 are thereby interlocked with the base 3, and the cover 5 is joined to the base 3.

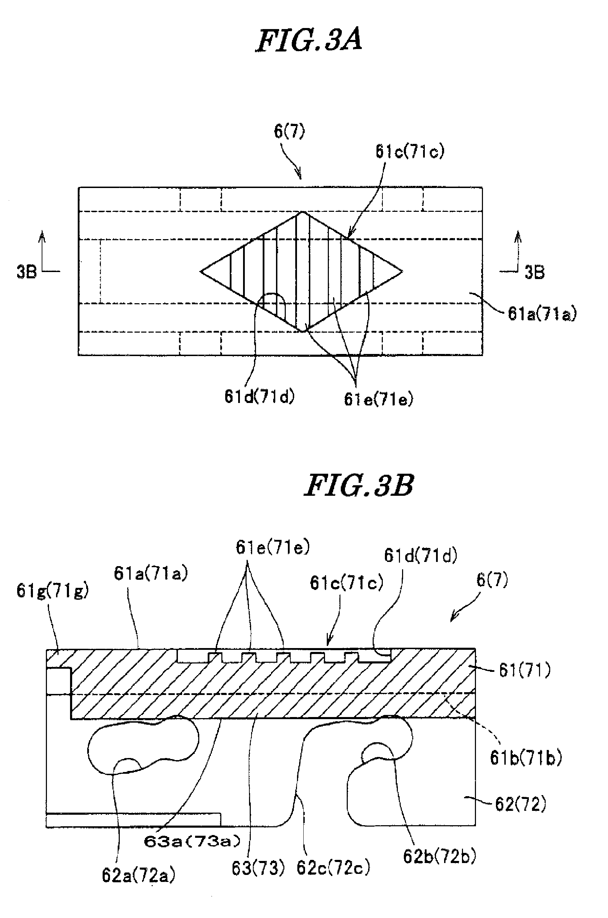

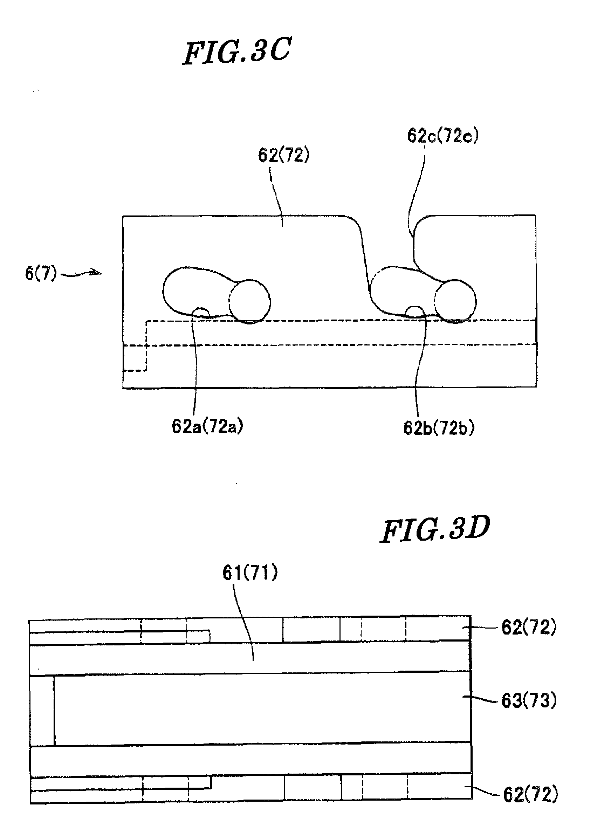

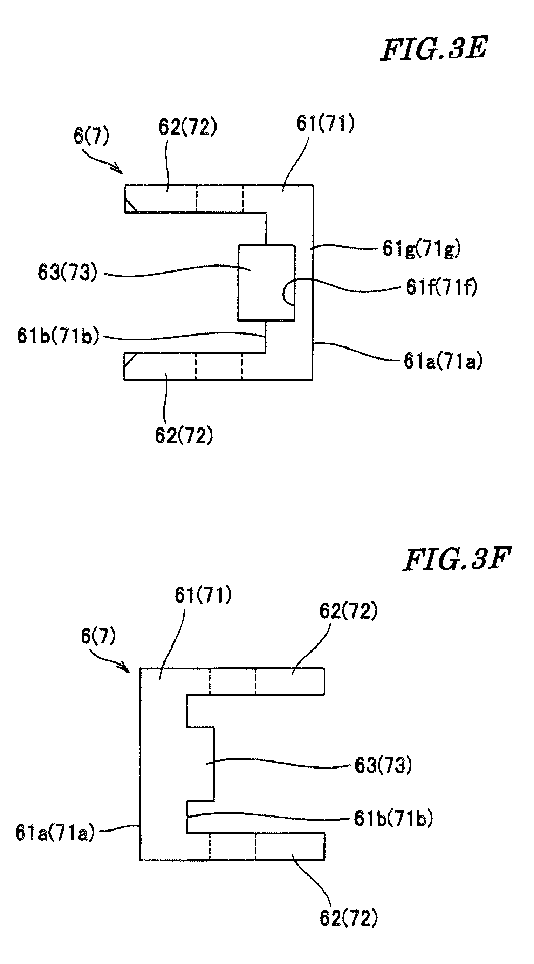

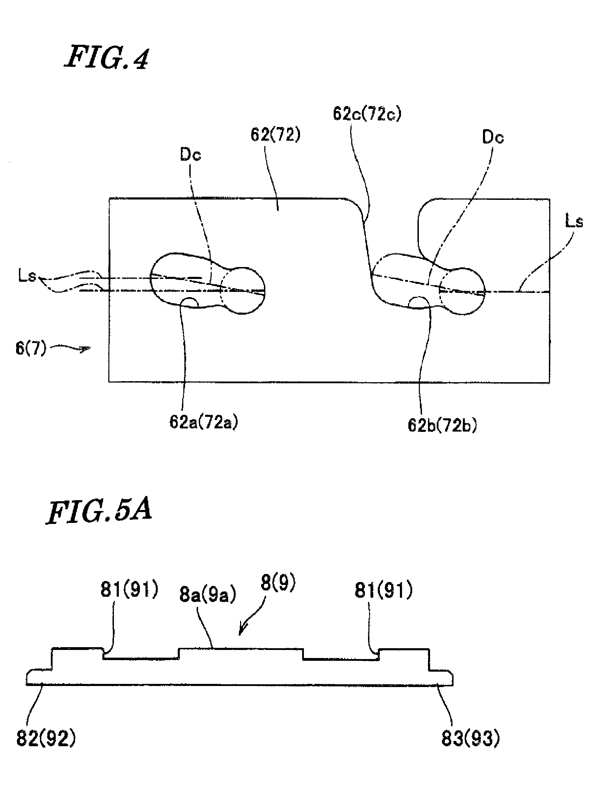

FIG. 3A is a plan view of a slider of the mechanical splice of FIG. 1. FIG. 3B is a cross-sectional view along line 3B-3B shown in FIG. 3A. FIG. 3C is a rear view of the slider shown in FIG. 3A. FIG. 3D is a bottom view of the slider shown in FIG. 3A. FIG. 3E is a lateral view of the slider shown in FIG. 3A. FIG. 3F is a lateral view of the slider shown in FIG. 3A. FIG. 4 is an enlarged rear view of the slider shown in FIG. 3.

A slider 6 has a cover plate 61 and two engagement plates 62, as shown in FIGS. 3 and 4.

A slip-resisting region 61c is formed on an upper surface 61a of the cover plate 61. The slip-resisting region 61c comprises a diamond-shaped concave part 61d formed in the central part of the upper surface 61a, and protrusions 61e formed on the bottom surface of this concave part 61d. An engagement piece 61g is formed on an end part of the cover plate 61.

The two engagement plates 62 are linked to the cover plate 61 and face each other. Two cam holes (first cam holes) 62a, 62b are formed in each of the engagement plates 62. The cam holes 62a, 62b extend in a direction Dc, which diagonally intersects a longitudinal direction Ls of the slider 6, and are parallel to one another (see FIG. 4). A notch 62c is also formed in each of the engagement plates 62. The notch 62c extends to the cam hole 62b. The cam pin 34 of the base 3 extends to the cam hole 62a, and the cam pin 35 extends through the notch 62c to the cam hole 62b. The slider 6 can thereby rotate around the cam pin 34 when the cam pins 34, 35 are correspondingly displaced towards the end parts of the cam holes 62a, 62b on the cover 5 side.

An optical fiber restraint 63 is formed on a lower surface 61b of the cover plate 61. The surface of the optical fiber restraint 63 on the base 3 side is a pressing surface 63a (e.g., a flat surface). The optical fiber restraint 63 fits to the central concave part 30 of the base 3, and the pressing surface of the optical fiber restraint linearly contacts a cover part (not shown) of the optical fiber 17 and restrains the optical fiber 17.

A slider 7 has the same configuration as the slider 6. As shown in FIGS. 3 and 4, the slider 7 has a cover plate 71, engagement plates 72, and an optical fiber restraint 73, which correspond respectively to the cover plate 61, the engagement plates 62, and the optical fiber restraint 63. An upper surface 71a, a lower surface 71b, a slip-resisting region 71c, a concave part 71d, protrusions 71e, and an engagement piece 71g of the cover plate 71 correspond respectively to the upper surface 61a, the lower surface 61b, the slip-resisting region 61c, the concave part 61d, the protrusions 61e, and the engagement piece 61g of the slider 6. Cam holes (second cam holes) 72a, 72b and a notch 72c of the engagement plates 72 correspond respectively to the cam holes 62a, 62b and the notch 62c. An optical fiber restraint 73 corresponds to the optical fiber restraint 63. A pressing surface 73a (e.g., a flat surface) of the optical fiber restraint 73 corresponds to the pressing surface 63a of the optical fiber restraint 63.

The slider 6 and the slider 7 constitute optical fiber immobilizing means for immobilizing to the base 3 both of the optical fibers 17, 18, which are accommodated in the first and second first optical fiber receiving slots 32, 33 of the base 3.

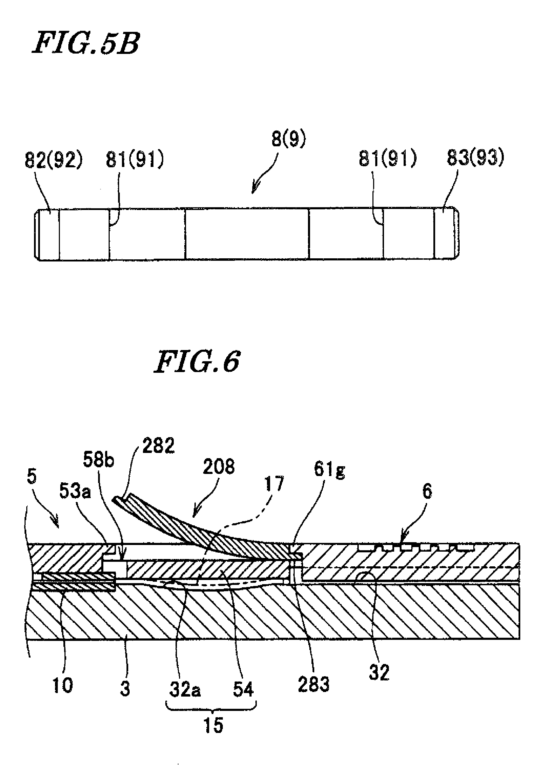

FIG. 5A is a front view of a shutter, and FIG. 5B is a plan view of the shutter.

A shutter 8 is substantially prismatic, as shown in FIGS. 5A and 5B. Two concave parts 81 are formed on an upper surface 8a of the shutter 8. Engagement pieces 82, 83 are formed on both of the longitudinal end parts of the shutter 8. The thickness of the engagement pieces 82, 83 is less than the thickness of the portions other than the engagement pieces 82, 83.

The shutter 8 is slidably accommodated in the receiving slot 56 of the cover 5. The shutter 8 slides within the receiving slot 56 and opens and closes the supply hole 58b of the cover 5.

A shutter 9 has the same configuration as the shutter 8, as shown in FIGS. 5A and 5B. An upper surface 9a, concave parts 91, and engagement pieces 92, 93 of the shutter 9 are respectively identical to the upper surface 8a, the concave parts 81, and the engagement pieces 82, 83 of the shutter 8.

The shutter 9 is slidably accommodated in the receiving slot 57 of the cover 5. The shutter 9 slides within the receiving slot 57 and opens and closes the supply hole 59b of the cover 5.

A hard resin is used as the material of the shutters 8, 9 in this embodiment.

The operation for connecting the optical fibers 17, 18 using the mechanical splice of this embodiment will be described next.

The cover 5 is mounted on the base 3 in advance of the connecting operation. The shutters 8, 9 are respectively accommodated in the receiving slots 56, 57 of the cover 5. The shutters 8, 9 are held in place so that the supply holes 58b, 59b of the cover 5 are not plugged thereby.

The cover parts (not shown) on the tip parts of the optical fibers 17, 18 (see FIG. 1B) are removed, and the strands (not shown) are exposed.

The space between the two engagement plates 62 of the slider 6 is pushed wider, and the cam pin 34 of the base 3 is passed to the cam hole 62a. Thereafter, the cam pin 35 is passed to the cam hole 62b via the notch 62c. The position of the slider 6 when the cam pins 34, 35 are correspondingly moved towards the end parts of the cam holes 62a, 62b on the cover 5 side in this state is a first position for optical fiber insertion (a position in which the optical fiber 17 is readily inserted into the housing 2). In this position, the slider 6 rises up from the upper surface 3a of the base 3, and the optical fiber 17 can be readily inserted into the first optical fiber receiving slot 32.

Four of the optical fibers 17 are then accommodated in the respective first optical fiber receiving slots 32, and the strands of the optical fibers 17 are inserted into the respective strand-receiving holes 10a of the metal sleeve 10 (see FIG. 1E).

Thereafter, a bonding agent is injected through the supply hole 58b of the cover 5 into the concave part 58. A bonding agent that retains some pliability after hardening is appropriate.

The slider 6 is then pressed toward the cover 5 and moved to a first position for optical fiber immobilization (a position in which the optical fiber 17 is secured to the housing 2 by the slider 6), as shown in FIG. 1C. The slider 6 at this point moves along the direction Dc that diagonally intersects the longitudinal direction L (see FIG. 4) due to the operation of the cam pins 34, 35 and the cam holes 62a, 62b. The slider 6 therefore contacts the optical fiber 17 in the midst of this movement and thereafter moves to the position for optical fiber immobilization while pressing on the optical fiber 17. As a result, the optical fiber 17 bends within a first precompression space 15, and a force is generated for causing the distal end of the optical fiber 17 to move toward the optical fiber 18.

After having moved from the position for optical fiber insertion to the position for optical fiber immobilization (see FIG. 1C), the slider 6 hits the shutter 8 (see FIG. 1B), and the shutter 8 moves toward the sleeve restraining part 53 of the cover 5. The supply hole 58b of the cover 5 is closed by the shutter 8 at this point, and the engagement piece 61g of the slider 6 lodges on the engagement piece 83 of the shutter 8. The engagement piece 82 of the shutter 8 slips underneath the engagement piece 53a of the cover 5, and therefore the shutter 8 interlocks with the cover 5 and the slider 6.

As in the aforedescribed operation for mounting the slider 6, the cam pin 36 of the base 3 is passed to the cam hole 72a of the two engagement plates 72 of the slider 7. Thereafter, the cam pin 37 is passed to the cam hole 72b via the notch 72c. The position of the slider 7 when the cam pins 36, 37 are correspondingly moved towards the end parts of the cam holes 72a, 72b on the cover 5 side in this state is a second position for optical fiber insertion (a position in which the optical fiber 18 is readily inserted into the housing 2). In this position, the slider 7 rises up from the upper surface 3a of the base 3, and the optical fiber 18 can be readily inserted into the second optical fiber receiving slot 33.

Four of the optical fibers 18 are then accommodated in the respective second optical fiber receiving slots 33, and the strands of the optical fibers 18 are inserted into the respective strand-receiving holes 10a of the metal sleeve 10.

Thereafter, a bonding agent is injected through the supply hole 59b of the cover 5 into the concave part 59.

The slider 7 is then pressed toward the cover 5 and moved to a second position for optical fiber immobilization (a position in which the optical fiber 18 is secured to the housing 2 by the slider 7). The slider 7 at this point moves along the direction Dc that diagonally intersects the longitudinal direction L (see FIG. 4) due to the operation of the cam pins 36, 37 and the cam holes 72a, 72b. The slider 7 therefore contacts the optical fiber 18 in the midst of this movement and thereafter moves to the position for optical fiber immobilization while pressing on the optical fiber 18. As a result, the optical fiber 18 bends within a second precompression space 16, and a force is generated for causing the distal end of the optical fiber 18 to move toward the optical fiber 17. The optical fiber 18 contacts the optical fiber 17 due to this force, and is held in this state. The bonding agent injected into the concave parts 58, 59 is allowed to harden in this state.

After having moved from the position for optical fiber insertion to the position for optical fiber immobilization, the slider 7 hits the shutter 9, and the shutter 9 moves toward the sleeve restraining part 53 of the cover 5. The supply hole 59b of the cover 5 is closed by the shutter 9 at this point, and the engagement piece 71g of the slider 7 lodges on the engagement piece 93 of the shutter 9. The engagement piece 92 of the shutter 9 slips underneath the engagement piece 53b of the cover 5, and therefore the shutter 9 interlocks with the cover 5 and the slider 7.

Once the bonding agent in the concave parts 58, 59 hardens, the connection of the optical fibers 17, 18 is complete.

The operational effects according to the mechanical splice of this embodiment are as follows.

(1) When a mechanical splice in which the optical fibers 17, 18 are not bonded to both end parts of the metal sleeve 10 is used in an environment subject to frequent vibration (e.g., within the engine room of a vehicle), the vibration is transmitted to the optical fibers 17, 18. The optical fiber strands may hit the edges of the apertures on both ends of the metal sleeve 10 and suffer damage or breakage. However, according to the mechanical splice of this embodiment, the housing 2 has the supply holes 58b, 59b for supplying a bonding agent to both end parts of the metal sleeve 10. When the bonding agent is supplied through the supply holes 58b, 59b, the bonding agent enters the space between the outer circumferential surfaces of the optical fiber strands and the inner circumferential surface of the metal sleeve 10, and the optical fibers 17, 18 can therefore be bonded to both end parts of the metal sleeve 10. Damage to the optical fiber strands can therefore be prevented even when the mechanical splice is used in an environment subject to frequent vibration. Water and debris can be prevented from entering through the apertures on the ends of the metal sleeve 10.

(2) In environments subject to infrequent vibration, bonding the optical fiber strands is not essential, and a bonding agent need not be used. However, even in an environment subject to infrequent vibration, water and dust may enter into the housing 2 and thus into the metal sleeve 10 when a bonding agent is not supplied to the supply holes 58b, 59b of the housing 2 in an environment in which water and dust can be expected to enter through the supply holes 58b, 59b of the housing 2. According to the mechanical splice of this embodiment, the shutters 8, 9 for opening and closing the supply holes 58b, 59b are provided to the housing 2. In environments that are subject to infrequent vibration but in which water and dust can be expected to enter, the supply holes 58b, 59b can therefore be shut by the shutters 8, 9, and water and dust can be prevented from entering, even without using a bonding agent.

A jelly-form bonding agent may be employed when using the bonding agent in an environment subject to frequent vibration, but jelly-form bonding agents do not readily enter into the supply holes 58b, 59b, and the bonding agent will accumulate at the entrances of the supply holes 58b, 59b and therefore not be reliably supplied into the interior part of the housing 2. However, if the supply holes 58b, 59b are closed by the shutters 8, 9, the bonding agent will be pressed into the interior part of the housing 2 by the shutters 8, 9, and the bonding agent will be reliably supplied to the end parts of the metal sleeve 10 (e.g., supplied to the space between the outer circumferential surfaces of the optical fiber strands and the inner circumferential surface of the metal sleeve 10) without the use of a special tool. As a result, a high-strength bond is formed with the optical fiber strands. An operation for pressing the bonding agent into the interior part of the housing 2 using a tool is also unnecessary, resulting in good workability.

(3) When the sliders 6, 7 are made to slide from the position allowing optical fiber insertion to the position for optical fiber immobilization, a force is generated for pressing together the end surfaces of the strands of the optical fibers 17, 18, and the optical fibers 17, 18 are both bonded to the metal sleeve 10 in this state. The optical fibers 17, 18 can therefore be reliably connected without being shifted due to, e.g., changes in the outside environment (temperature changes and the like).

If a bonding agent that retains pliability after hardening is used, the optical fibers 17, 18 can move to some degree even after the bonding agent has hardened, the torsion resulting from the tendency of the optical fibers 17, 18 to curl can be absorbed, and substantially no stress is created on the bonding portions of the optical fibers 17, 18.

(4) The end surfaces of the strands of the optical fiber 17 and the end surfaces of the strands of the optical fiber 18 may be welded together to minimize transmission loss between the optical fibers 17, 18, but the optical fibers 17, 18 have a tendency to curl, and stress is therefore generated on the welded portions of the optical fibers 17, 18. As a result, the welded portions of the optical fibers 17, 18 may break. However, according to this embodiment, the end surfaces of the strands of the optical fibers 17, 18 are pressed together by the action of the sliders 6, 7 until the bonding agent at both of the end parts of the metal sleeve 10 hardens, even when the strands of the optical fibers 17, 18 are not joined. Transmission loss between the optical fibers 17, 18 can therefore be minimize.

(5) The optical fiber restraints 63, 73 are formed respectively on the sliders 6, 7, and the pressing surfaces of the optical fiber restraints 63, 73 linearly contact the optical fibers 17, 18. The sliders 6, 7 can therefore tightly hold the optical fibers 17, 18.

(6) The optical fibers 17, 18 are bonded to both end parts of the metal sleeve 10. The optical fibers 17, 18 therefore are not readily detached from the housing 2, even when pulled.

(7) If the sliders 6, 7 are moved from the position for optical fiber insertion to the position for optical fiber immobilization, the supply holes 58b, 59b of the cover 5 can be automatically closed by the shutters 8, 9, and the shutters 8, 9 can be automatically interlocked with the cover 5.

(8) When the sliders 6, 7 are made to slide from the position allowing optical fiber insertion to the position for optical fiber immobilization, a force is generated for pressing together the end surfaces of the strands of the optical fibers 17, 18, and the optical fibers 17, 18 are both bonded to the metal sleeve 10 in this state. The optical fibers 17, 18 can therefore be reliably connected without being shifted due to, e.g., changes in the outside environment (temperature changes and the like).

FIG. 6 is a cross-sectional view of the mechanical splice according to a second embodiment of the present invention. The same notation will be applied to those portions that are shared with the first embodiment, and descriptions thereof will be omitted. Only the main differences will be described below.

The shutter 8 in the mechanical splice of the first embodiment is formed from a hard resin, but a shutter 208 in the mechanical splice of the second embodiment is formed from synthetic rubber. The other shutter (not shown) of the mechanical splice of the second embodiment is formed from synthetic rubber, as is the shutter 208.

As shown in FIG. 6, the shutter 208 in the second embodiment can be removed from the base 3 by being bent and removing engagement pieces 282, 283 of the shutter 208 from the engagement pieces 53a, 61g. Therefore, in the second embodiment, even when the optical fiber 17 is not initially bonded to the metal sleeve 10, subsequently, and as necessary, the shutter 208 can be removed from the base 3, the supply hole 58b can be opened, and the optical fiber 17 can be bonded to the metal sleeve 10 using a bonding agent supplied through the supply hole 58b. After bonding, the shutter 208 can be interlocked with the base 3 if the shutter 208 is bent against the force of the elasticity thereof and placed between the engagement pieces 53a, 61g, after which the shutter 208 is returned to a straightened state, and the engagement pieces 282, 283 are engaged with the engagement pieces 53a, 61g. The shutter 208 can thus be attached to and detached from the base 3 irrespective of the slider 6.

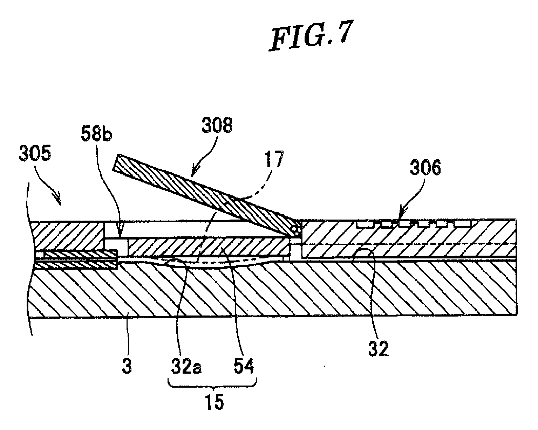

FIG. 7 is a cross-sectional view of the mechanical splice according to a third embodiment of the present invention. The same notation will be applied to those portions that are shared with the first embodiment, and descriptions thereof will be omitted. Only the main differences will be described below.

The shutter 8 in the mechanical splice of the first embodiment is made to interlock with the cover 5 and the slider 6, but a shutter 308 in the mechanical splice of the third embodiment is rotatably attached to a cover 305, as shown in FIG. 7. Portions corresponding to the engagement pieces 53a, 61g of the mechanical splice of the first embodiment are therefore not present on the cover 305 and a slider 306.

The supply hole 58b in the third embodiment can be opened and closed by rotating the shutter 308. In the third embodiment, as in the second embodiment, even when the optical fiber 17 is not initially bonded to the metal sleeve 10, subsequently, and as necessary, the shutter 308 can be rotated, the supply hole 58b can be opened, and the optical fiber 17 can be bonded to the metal sleeve 10 using a bonding agent [supplied] through the supply hole 58b. After bonding, the supply hole 58b can be closed by the shutter 308 if the shutter 308 is rotated toward the base 3. The slider 306 thus need not be moved when rotating the shutter 308, and therefore the engagement pieces 53a, 61g that interlock the shutter 308 with the slider 306 and the base 3 are not damaged.

The shutter 308 may also be rotatably provided to the base 3.

A mechanical splice for connecting four optical fibers is described in the above embodiments, but the present invention may also be applied to a mechanical splice for single cores.

The optical fibers 17, 18 are bonded to the metal sleeve 10 in the aforedescribed embodiments, but the optical fibers 17, 18 need not be bonded to the metal sleeve 10 in cases where there is little chance of a strong pulling force being applied to the optical fibers 17, 18.

The two shutters 8, 9, 208, 308 are used as opening and closing members in the aforedescribed embodiments, but a single opening and closing member may also be used.

The metal sleeve 10 is employed in the above embodiments, but the material of the sleeve is not limited to metal.

## Claims

1. A mechanical splice, **characterized in** comprising:
a sleeve for bringing into contact an end part of a first optical fiber and an end part of a second optical fiber to be connected to the first optical fiber;
a housing for accommodating both of the optical fibers and the sleeve; and
optical fiber immobilizing means for securing both of the optical fibers to the housing, the optical fibers being accommodated in the housing, wherein
the optical fiber immobilizing means has:
a first movable member for conveying the end part of the first optical fiber toward the end part of the second optical fiber when [the first movable member is] moved along a first direction from a first position allowing optical fiber insertion to a first position for optical fiber immobilization, the first movable member being linked to a first end part of the housing so as to be capable of sliding in the first direction, the first direction intersecting a longitudinal direction of the housing; and
a second movable member for conveying the end part of the second optical fiber toward the end part of the first optical fiber when [the second movable member is] moved along a second direction from a second position allowing optical fiber insertion to a second position for optical fiber immobilization, the second movable member being linked to a second end part of the housing so as to be capable of sliding in the second direction, the second direction intersecting with the longitudinal direction of the housing; and
the housing has supply holes for supplying a bonding agent to both end parts of the sleeve.

2. The mechanical splice according to claim 1, **characterized in** comprising an opening and closing member for opening and closing the supply hole, the opening and closing member being provided to the housing.

3. The mechanical splice according to claim 1 or 2, **characterized in that:**
the first movable member has a pressing surface for contacting the first optical fiber while moving along the first direction from the first position allowing optical fiber insertion to the first position for optical fiber immobilization; and
the second movable member has a pressing surface for contacting the second optical fiber while moving along the second direction from the second position allowing optical fiber insertion to the second position for optical fiber immobilization.

4. The mechanical splice according to any of claims 1 through 3, **characterized in that** at least one movable member from among the first and second movable members engages with the opening and closing member so as to operate the opening and closing member and close the two supply holes when moved from the position allowing optical fiber insertion to the position for optical fiber immobilization.

5. The mechanical splice according to any of claims 1 through 4, **characterized in that** the housing has a first precompression space part for bending the end part of the first optical fiber, and a second precompression space part for bending the end part of the second optical fiber.

6. The mechanical splice according to any of claims 1 through 5, **characterized in that**
a first cam pin is provided to the first end part of the housing, and a first cam hole for engaging with the first cam pin and causing the first movable member to move in the first direction is formed on the first movable member; and
a second cam pin is provided to the second end part of the housing, and a second cam hole for engaging with the second cam pin and causing the second movable member to move in the second direction is formed on the second movable member.
